(19) Europäisches Patentamt

European Patent Office

Office européen des brevets

(11) **EP 1 712 568 A1**

(12) **EUROPÄISCHE PATENTANMELDUNG**

(43) Veröffentlichungstag:
 **18.10.2006 Patentblatt 2006/42**

(51) Int Cl.:
 **C08B 37/18** *(2006.01)*

(21) Anmeldenummer: **05090107.3**

(22) Anmeldetag: **15.04.2005**

(84) Benannte Vertragsstaaten:
 **AT BE BG CH CY CZ DE DK EE ES FI FR GB GR
 HU IE IS IT LI LT LU MC NL PL PT RO SE SI SK TR**
 Benannte Erstreckungsstaaten:
 **AL BA HR LV MK YU**

(71) Anmelder: **Bayer CropScience GmbH
 65929 Frankfurt/Main (DE)**

(72) Erfinder:
 • **Hellwege, Elke
  12207 Berlin (DE)**
 • **Pilling, Jens
  14169 Berlin (DE)**

(74) Vertreter: **Kossmann, Jochen
 Bayer BioScience GmbH
 Hermannswerder 20a
 14473 Potsdam (DE)**

(54) **Langkettiges Inulin**

(57) Die Erfindung betrifft langkettiges Inulin und dessen Herstellung aus Wurzeln von Artischocken

EP 1 712 568 A1

Printed by Jouve, 75001 PARIS (FR)

**Beschreibung**

Die Erfindung betrifft langkettiges Inulin und dessen Herstellung aus Wurzeln von Artischocken.

Inulin ist ein zur Gruppe der Fruktane gehörendes Polysaccharid. Es besteht aus einer beta -2-1-verknüpften Kette von Fruktosemolekülen, wobei diese Kette an ihrem Ende eine alpha -D-Glukose-Einheit am reduzierenden Ende trägt. Inulin kommt in wirtschaftlich gewinnbaren Mengen in verschiedenen Pflanzen, wie z.B. Zichorienwurzeln und Dahlienknollen vor. Darüber hinaus wurde Inulin beispielsweise in Jerusalemartischocken und Artischocken gefunden. Die mittleren Kettenlängen der unterschiedlichen Inuline und deren physiko-chemischen Eigenschaften unterscheiden sich von Pflanzenart zu Pflanzenart.

Extrahiert man Inulin mit heißem Wasser aus dem Pflanzengewebe so enthält der Extrakt neben dem polymeren Rohinulin noch Monosaccharide wie Glukose und Fruktose, Disaccharide wie Saccharose und Fruktooligosaccharide (DP 3-10). Diese Nebenprodukte (Mono- und Disaccharide, Fruktooligosaccharide (DP 3-10) können bei der weiteren Verarbeitung des Inulins stören. Beispielsweise sind Mono- und Disaccharide bei der Herstellung von diätetischen Lebensmitteln unerwünscht. Bei bestimmten Anwendungen im Lebensmittelbereich ist der süße Geschmack der Mono- und Disaccharide, Fruktooligosaccharide (DP 3-10) störend. Fruktooligosaccharide (DP 3-10) können aufgrund ihrer Hygroskopizität bzw. Klebrigkeit bei der Verwendung von Rohinulin in Lebensmitteln sowohl bei der Verarbeitung als auch bei der Lagerung sehr stören. Bei der weiteren Verarbeitung des Rohinulins, beispielsweise durch chemische Derivatisierung, können Mono- und Disaccharide, Fruktooligosaccharide (DP 3-10) zu undefinierten Produktgemischen führen, die sich nicht oder nur mit kostenintensiven Methoden aufreinigen lassen.

Deshalb ist es wünschenswert, Inulin zur Verfiigung zu stellen, das im Vergleich zu Rohinulin einen geringen Gehalt an Mono- und Disacchariden sowie an Fruktooligosacchariden (DP 3-10) aufweist.

Der vorliegenden Erfindung liegt daher die Aufgabe zu Grunde, Inulin mit neuen Eigenschaften zur Verfügung zu stellen.

Diese Aufgabe wird durch die Bereitstellung der in den Patentansprüchen bezeichneten Ausführungsformen gelöst.

Gegenstand der vorliegenden Erfindung ist Inulin, dadurch gekennzeichnet, dass das Inulin einen mittleren Polymerisationsgrad $DP_w$ zwischen 54 und 61 aufweist, vorzugsweise zwischen 55 und 60, besonders bevorzugt zwischen 56 und 57.

In diesem Zusammenhang und im Zusammenhang mit der vorliegenden Erfindung soll der Begriff "zwischen" die jeweils angegebenen Zahlengrenzen auch mit einschließen.

Unter dem Begriff "Inulin" soll im Zusammenhang mit der vorliegenden Erfindung ein Polyfruktan verstanden werden, das aus einer beta-2-1-verknüpften Kette von Fruktosemolekülen besteht. Vorzugsweise trägt diese Kette an ihrem Ende eine reduzierende alpha -D-Glukose-Einheit. Der Verzweigungsgrad an beta-2,6-verknüpften Fruktoseeinheiten beträgt weniger als 5%, vorzugsweise weniger als 2%.

Im Zusammenhang mit der vorliegenden Erfindung wird unter dem Begriff "mittlerer Polymerisationsgrad $DP_w$" (im Englischen: mean DP weight) der Quotient aus der gewichtsmittleren Molmasse $M_w$ und der Molmasse des Monomeren $M_o$ verstanden. Die gewichtsmittlere Molmasse $M_w$ ergibt sich aus

$$M_w = \frac{\sum N_i M_i{}^2}{\sum N_i M_i} \quad ,$$

wobei $N_i$ die Zahl der Moleküle mit der Molmasse $M_i$ ist.

Der "mittlerer Polymerisationsgrad $DP_w$" wird im Zusammenhang mit der vorliegenden Erfindung vorzugsweise nach der weiter unten beschriebenen Methode "Gelpermeationschromatographie mit Lichtstreu- und Brechungsindex-Detektion (GPC-RI-MALLS - System)" ermittelt.

Das erfindungsgemäße Inulin weist im Vergleich zu den im Stand der Technik beschriebenen Inulinen den überraschenden Vorteil auf, dass es zu Cremes verarbeitet werden kann, die bei Hitze- oder Säure-Behandlung eine ungewöhnlich hohe Stabilität aufweisen, so dass sie beispielsweise für bestimmte technische Anwendungen oder Anwendungen in der Kosmetik- und/oder Lebensmittelindustrie besser geeignet sind. Darüber hinaus zeigen Cremes, die das erfindungsgemäße Inulin enthalten, eine unerwartet hohe Stabilität gegenüber Scherkräften. Das erfindungsgemäße Inulin weist somit gegenüber herkömmlichem Inulin den weiteren Vorteil auf, dass es sich in technischen Prozessen, bei denen starke Scherkräfte wirken, besser verarbeiten lässt.

In einer weiteren Ausführungsform ist das erfindungsgemäße Inulin dadurch gekennzeichnet, dass der Gehalt von Fruktooligosacchariden (Oligofruktane) mit einem DP von 3 bis 10 kleiner ist als 3 %, vorzugsweise kleiner als 1,5 %, besonders bevorzugt kleiner als 0,7%, ganz besonders bevorzugt kleiner als 0,3%.

Der Gehalt von Fruktooligosacchariden mit einem DP von 3 bis 10 wird im Zusammenhang mit der vorliegenden Erfindung nach der unten beschriebenen Methode ermittelt (siehe Allgemeine Methoden: "Analyse von Inulin mittels Ionenaustauschchromatographie und mit gepulster amperometrischer Detektion (HPAEC-PAD) sowie "Bestimmung des prozentualen Anteils von Inulinoligomeren mit Kettenlänge DP=3 bis DP=10 am Gesamtinulin mittels HPAEC-PAD").

In einer weiteren Ausführungsform ist das erfindungsgemäße Inulin dadurch gekennzeichnet, dass der Gehalt an Glukose kleiner ist als 2%, vorzugsweise kleiner als 1 %, besonders bevorzugt kleiner als 0,5%, ganz besonders bevorzugt kleiner als 0,2%.

In einer weiteren Ausführungsfonn ist das erfindungsgemäße Inulin dadurch gekennzeichnet, dass der Gehalt an Fruktose kleiner ist als 2,5%, vorzugsweise kleiner als 1,5% besonders bevorzugt kleiner als 1,0%, ganz besonders bevorzugt kleiner als 0,3%.

In einer weiteren Ausführungsfonn ist das erfindungsgemäße Inulin dadurch gekennzeichnet, dass der Gehalt an Saccharose kleiner ist als 2%, vorzugsweise kleiner als 1%, besonders bevorzugt kleiner als 0,5%, ganz besonders bevorzugt kleiner als 0,3%.

Der Gehalt von Fruktose, Glukose und Saccharose wird im Zusammenhang mit der vorliegenden Erfindung nach der unten beschriebenen optisch-enzymatischen Methode ermittelt (Allgemeine Methoden: "Zuckerbestimmung").

In einer weiteren Ausführungsform ist das erfindungsgemäße Inulin dadurch gekennzeichnet, dass es eine gewichtsmittlere Molmasse $M_w$ zwischen 8740 g/mol und 9890 g/mol aufweist, vorzugsweise zwischen 8910 g/mol und 9720 g/mol, besonders bevorzugt zwischen 8910 g/mol und 9250 g/mol.

Die gewichtsmittlere Molmasse $M_w$ wird im Zusammenhang mit der vorliegenden Erfindung vorzugsweise nach der weiter unten beschriebenen Methode "Gelpermeationschromatographie mit Lichtstreu- und Brechungsindex-Detektion (GPC-RI-MALLS - System)" ermittelt.

In einer weiteren Ausführungsform ist das erfindungsgemäße Inulin dadurch gekennzeichnet, dass es einen mittleren Polymerisationsgrad $DP_n$ zwischen 44 und 48 aufweist, vorzugsweise zwischen 45 und 48, besonders bevorzugt zwischen 46 und 48.

Der "mittlere Polymerisationsgrad $DP_n$" wird im Zusammenhang mit der vorliegenden Erfindung vorzugsweise nach der weiter unten beschriebenen Methode "Gelpermeationschromatographie mit Lichtstreu- und Brechungsindex-Detektion (GPC-RI-MALLS - System)" ermittelt.

Im Zusammenhang mit der vorliegenden Erfindung wird unter dem Begriff "mittlerer Polymerisationsgrad $DP_n$" (im Englischen: mean DP number) der Quotient aus der zahlenmittleren Molmasse $M_n$ und der Molmasse des gebundenen Monomeren $M_o$ (Anhydrofruktose = 162 g/mol). Die zahlenmittlere Molmasse $M_n$ ergibt sich aus

$$M_n = \frac{\sum N_i M_i,}{\sum N_i} \, ,$$

wobei $N_i$ die Zahl der Moleküle mit der Molmasse $M_i$ ist.

In einer weiteren Ausführungsform weist das erfindungsgemäße Inulin eine Molekulargewichtsverteilung von 1620 g/mol bis 40.000 g/mol, vorzugsweise von 2268 g/mol bis 32000 g/mol, besonders bevorzugt von 2592 g/mol bis 29160 g/mol auf.

Die Molekulargewichtsverteilung wird im Zusammenhang mit der vorliegenden Erfindung vorzugsweise nach der weiter unten beschriebenen Methode "Gelpermeationschromatographie mit Lichtstreu- und Brechungsindex-Detektion (GPC-RI-MALLS - System)" ermittelt.

**Allgemeine Methoden**

**1. Inulinreinigung und -fraktionierung**

Für die Präparation werden 1 kg Wurzeln mit einem Wurzeldurchmesser von 0,5 - 5,0 cm von ca. 1 Jahr alten Artischockenpflanzen verwendet. Dieses Material wird in 200 g Portionen in einem Homogenisator (Waring Blender, Firma VWR International GmbH, Darmstadt, Deutschland) mit 500 ml 85°C heißem Wasser homogenisiert. Die erhaltenen Homogenate werden in einem im 85°C heißen Wasserbad stehenden Metallgefäß vereinigt, das Extraktionsvolumen auf 5 l Wasser erhöht und das Inulin aus dem Material 45 Minuten lang bei 80-85°C unter Rühren extrahiert. Der heiße Extrakt wird durch ein 125 $\mu$m Sieb filtriert. Der Filterkuchen wird in ein Baumwolltuch überführt und ausgepresst. Die ausgepresste Lösung wird mit dem Filtrat vereinigt (insgesamt ca. 5 Liter).

Die Reinigung des Inulin-Rohextrakts von Nichtzuckerstoffen erfolgt über Kalkung und Karbonation. Bei der Vorkalkung wird der Rohextrakt mit Ca(OH)$_2$ unter Rühren auf einen pH-Wert von 11,2 eingestellt. Die Verweilzeit des Extrakts bei diesem pH-Wert beträgt 30 Minuten, die Temperatur des Extrakts 65°C. Für die Hauptkalkung wird durch Zugabe von Ca(OH)$_2$ eine pH-Werterhöhung auf pH>12 erzielt, und der Extrakt anschließend 30-45 Minuten lang bei 85°C gerührt. Um die ausgefallenen Trübstoffe leichter filtrierbar zu machen, wird in einem ersten Karbonationsschritt durch schnelles Einleiten von CO$_2$ der pH-Wert des Extrakts auf pH=10,8 gesenkt. Die Temperatur bei diesem Vorgang beträgt ca. 65°C. Der gebildete Schlamm wird durch Zentrifugation (2800g, 10 min) abgetrennt. In einem zweiten Karbonationsschritt wird der pH-Wert des Überstandes durch CO$_2$-Einleitun auf pH = 8,9 abgesenkt. Der gebildete Schlamm wird durch Zentrifugation (2800g, 10 min) und anschließender Filtration über einen Papierfilter (Schleicher& Schuell, Bestell-Nr. 10311614) mit einer Nutsche unter Vakuum vom Extrakt abgetrennt.

Die Entfärbung des Extrakts erfolgt durch sukzessive Zugabe von 10-15% (w/v) Ionenaustauscher (mixed bed resin TMD8, Sigma, Bestell-Nr. M8157) unter Rühren im Batch-Verfahren. Nach der Abtrennung des Ionenaustauscher mittels Filtration über 30 $\mu$m Siebe wird die Lösung mit KOH auf pH = 7,0 eingestellt.

Zur selektiven Anreicherung von längerkettigen Inulinpolymeren (DP>10) wird absoluter Ethanol bis zu einer Endkonzentration von 40% (v/v) zu der Lösung gegeben, die Lösung gut gemischt und über Nacht bei 8°C inkubiert. Das gefällte Inulin wird durch Zentrifugation (2800g, 10 min) sedimentiert. Der Inulin-Niederschlag wird zweimal mit 1,6 Liter 80% (v/v) Ethanol gewaschen. Das gewaschene Inulin wird in 1 Liter Wasser bei 95°C im Wasserbad gelöst, Schwebstoffe durch Filtration über ein 30 $\mu$m Sieb entfernt, die Inulinlösung bei -80°C eingefroren. Anschließend wird das Wasser durch Gefriertrocknung (Alpha 1-4, Firma Christ, Deutschland) entfernt und das getrocknete Inulinpulver isoliert.

## 2. Fruktanbestimmung

### 2.1 Fructan Assay Procedure

Der Fruktangehalt einer Probe kann mit dem "Fructan Assay Procedure"-Kit (Firma Megazyme International Ireland Ltd, Wicklow, Ireland) bestimmt werden. Das Prinzip dieses Assays beruht auf der Hydrolyse des Fruktans in seine reduzierenden Monomere Glukose und Fruktose und der anschließenden photometrischen Bestimmung (Wellenlänge = 410 nm) des Gehalts dieser reduzierenden Zucker (Glukose, Fruktose) nach Anfärbung mit der sogenannten "PAHBAH-Methode" (Details zur Methode siehe unten).

In einem ersten Schritt wird die im Extrakt vorhandene Saccharose durch das spezifische Enzym Sucrase zu Glukose und Fruktose hydrolysiert. Ferner werden im Extrakt vorhandene Stärken und Maltodextrine mit einer Mischung aus den hoch aufgereinigten Enzymen β-Amylase, Pullulanase und Maltase ebenfalls zu Glukose abgebaut. Die entstandenen reduzierenden Zucker werden danach durch Behandlung mit alkalischer Borhydridlösung zu Zuckeralkoholen reduziert und damit aus der Lösung entfernt. Durch Zugabe von verdünnter Essigsäure wird die Lösung neutralisiert und überschüssiges Borhydrid entfernt. Anschließend wird das Fruktan mit gereinigter Fruktanase (Exo-Inulinase) zu Fruktose und Glukose hydrolysiert und der Gehalt der entstandenen Monosaccharide mit der PAHBAH-Methode bestimmt.

Chemikalien und Lösungen des "Fructan Assay Procedure"-Kits

1. 50 U Sucrase (Hefe), 500 U β-Amylase (B. cereus), 100 U Pullulanase (K. pneumoniae) und 1000 U Maltase (Hefe) sind als gefriergetrocknetes Pulver enthalten und werden zur Messung in 22 ml 0,1 M Natriummaleat-Puffer pH 6,5 gelöst (im folgenden als "Enzyme 1" bezeichnet).

2. 8000 U Fructanase (Exo-Inulinase) sind als gefriergetrocknetes Pulver enthalten und werden zur Messung in 22 ml 0,1 M Natriumacetatpuffer pH 4,5 gelöst (im folgenden als "Enzyme 2" bezeichnet).

3. Fruktosestandardlösung (1,5 mg Fruktose/ml), gelöst in 0,2% Benzoesäure.

4. Fruktankontrollpulver

Dahlienfruktan mit bekanntem Fruktangehalt, das in Gegenwart von alpha-Zellulose gefriergetrocknet wurde.

nicht im Kit enthaltene Lösungen:

I. PAHBAH-Reagenz

Lösung A: 10 g PAHBAH (p-Hydroxybenzoesäurehydrazid, Sigma Bestell-Nr. H-9882) werden zu 60 ml destilliertem Wasser in ein 250 ml Becherglas gegeben und zu der Suspension unter Rühren 10 ml konzentrierte Salzsäure addiert. Die Lösung wird auf 200 ml aufgefüllt und bei Raumtemperatur gelagert.

Lösung B: Unter Rühren werden schrittweise erst 24,9 g Tri-Natriumcitrat dann 2,20 g Kalziumchlorid und schließlich 40 g Natriumhydroxid in 500 ml destilliertem Wasser gelöst. Nach der Natriumhydroxidzugabe kann die Lösung milchig sein, klärt sich aber, wenn die Lösung mit Wasser auf 2 1 aufgefüllt wird. Die Lösung wird bei Raumtemperatur gelagert.

Kurz vor der Benutzung werden 20 ml Lösung A zu 180 ml Lösung B gegeben und sehr gut gemischt (= PAHBAH-Reagenz). Die Lösung muss auf Eis aufbewahrt werden und ist für 4 Stunden verwendbar.

II. 50 mM Natriumhydroxidlösung

III. alkalische Natriumborhydridlösung

10 mg/ml Natriumborhydrid (Sigma, Bestell-Nr. S-9125) in 50 mM Natriumhydroxid

IV. 100 mM Essigsäure

Nachweismethode:

1. (A) Fruktankontrolle

20 mg des Fruktankontrollpulvers werden in 1 ml bidestilliertem Wasser 30 Minuten lang im Heizblock bei 95°C extrahiert. Nach dem Zentrifugieren (5 Minuten lang bei 13000xg) wird der Überstand in ein neues Reaktionsgefäß überführt und der Niederschlag erneut in 1 ml destilliertem Wasser aufgenommen und 30 Minuten lang im Heizblock bei 95°C extrahiert. Nach dem erneuten Zentrifugieren (siehe oben) wird der Überstand abgenommen und mit dem ersten Überstand vereinigt.

(B) gereinigtes Fruktan/Inulin

20 mg werden in 2 ml bidestilliertem Wasser 1 Stunde lang im Heizblock bei 95°C extrahiert. Nach dem Zentrifugieren (5 Minuten lang bei 13000xg) wird der Überstand in ein neues Reaktionsgefäß überführt und für die Messung verwendet.

2. 200 $\mu$l Probe werden mit 200 $\mu$l Enzym 1 gemischt und bei 40°C für 60 Minuten inkubiert (Inkubationszeit vom Megazymeprotokoll um 30 Minuten verlängert).

3. 200 $\mu$l alkalische Natriumborhydridlösung werden hinzugegeben, die Lösung gut gemischt und für 30 Minuten bei 40°C inkubiert, um eine komplette Umwandlung der reduzierenden Zucker zu Zuckeralkoholen zu erreichen.

4. Durch Zugabe von 500 $\mu$l 100 mM Essigsäure und gutem Mischen wird das überschüssige Borhydrid entfernt und die Lösung aufpH=4,5 eingestellt.

5. Die Extrakte vom gereinigten Fruktan/Inulin - nicht die Fruktankontrolle - werden 1:5 mit bidestilliertem Wasser verdünnt. Von diesem Ansatz sowie von der Fruktankontrolle werden anschließend 100 $\mu$l Lösung mit 100 $\mu$l 100 mM Na-Acetat-Puffer pH 4,5 versetzt.

6. Die 200 $\mu$l Lösungen werden mit 100 $\mu$l Enzym- 2 gemischt und für 60 Minuten bei 40°C inkubiert (Inkubationszeit von Megazym-Kit wurde um 40 Minuten verlängert, um eine vollständige Hydrolyse des Fruktans zu erreichen).

7. Als weitere Probe wird ein Fruktosestandard mitgeführt. 200 $\mu$l der im Kit vorhandenen Fruktosestandardlösung werden mit 900 $\mu$l 100 mM Natriumacetatpuffer pH 4,5 versetzt und gemischt. Von dieser Mischung werden 4 x 200 $\mu$l abgenommen und mit weiteren 100 $\mu$l 100 mM Natriumacetatpuffer pH 4,5 versetzt.

8. Alle Proben und eine zusätzliche Nullprobe (300 $\mu$l 100 mM Natriumacetatpuffer pH 4,5) wurden mit 5 ml PAHBAH-Reagenz gemischt und für exakt 6 Minuten in einem kochenden Wasserbad inkubiert.

9. Danach werden die Proben sofort in kaltem Wasser (10-15°C) für ca. 5 Minuten abgekühlt.

10. Die Absorption aller Lösungen wird im Spektralphotometer bei einer Wellenlänge von bei 410 nm gegen die Nullprobe gemessen.

Die Berechnung erfolgt nach der folgenden Gleichung:

$$\text{Fruktan (\%w/w)} = \Delta E \times F \times 5 \times V_{Ex} \times 1,1/0,2 \times 100/W \times 1/1000 \times 162/180$$

$\Delta E =$     die PAHBAH-Absorption der Proben, gemessen gegen die Nullprobe

$F =$     der Faktor für Umrechnung der Fruktoseabsorption in $\mu$g Fruktose (54,5 $\mu$g Fruktose/Absorption)

$5 =$     Faktor, um von 200 $\mu$l auf 1 ml Inkubationsvolumen umzurechnen

$V_{EX} =$     Extraktvolumen

1,1/0,2 -     0,2 ml aus 1,1 ml enzymatischen Verdau

W =           Gewicht der extrahierten Probe in mg

100/W -       Faktor, um Fruktan in % der Einwaage (W) anzugeben

1/1000 -      Umrechnung von $\mu$g in mg

162/180=      Faktor, um gemessene freie Fruktose in die im Fruktan gebundene Anydrofruktose umzurechnen

## 2.2 Fruktanbestimmung durch Hydrolyse mit Exoinulinase

1% (w/v) Material wird in bidestilliertem Wasser für 30 Minuten bei 95°C extrahiert und anschließend 1:25 mit Wasser (siehe oben) verdünnt. Für den Exo-Inulinase-Verdau (100 $\mu$l) werden 50 $\mu$l Extrakt in 0,1 M Natriumacetat pH 5,6 mit 25 U Exo-Inulinase (Megazyme International Ireland Ltd, Wicklow, Ireland, Artikel-Nr. E-EXO1) für drei Stunden bei 40°C inkubiert. Die Reaktion wird durch 10-minütige Inkubation bei 95°C gestoppt. Die photometrische Bestimmung der freigesetzten Glukose und Fruktose erfolgt wie in der Methode "Zuckerbestimmung" beschrieben. Die Ermittlung des Fruktangehalts erfolgt durch Addition der Glukose- und Fruktosegehalte sowie unter Einbeziehung des Faktor 162/180, mit dem die gemessenen freien Hexosen in die im Fruktan gebundenen Hexosen umgerechnet werden.

## 3. Zuckerbestimmung (Glukose, Fruktose und Saccharose)

Die Bestimmung der Glukose, Fruktose und Saccharose-Gehalte erfolgte photometrisch in einem enzymatischen Assay über die Umwandlung von NAD$^+$ (Nicotinamide Adenine Dinucleotide) zu NADH (reduced Nicotinamide Adenine Dinucleotide). Bei der Reduktion geht am Nicotinamidring der aromatische Charakter verloren, und damit ändert sich das Absorptionsspektrum. Diese Veränderung im Absorptionsspektrum kann photometrisch detektiert werden. Glukose und Fruktose werden mittels des Enzyms Hexokinase und Adenosintriphosphat (ATP) in Glukose-6-Phosphat und Fruktose-6-Phosphat umgewandelt. Das Glukose-6-Phosphat wird anschließend durch das Enzym Glukose-6-Phosphat-Dehydrogenase zu 6-Phosphoglukonat oxidiert. Bei dieser Reaktion wird NAD$^+$ zu NADH reduziert und die gebildete NADH-Menge photometrisch ermittelt. Das gebildete NADH steht im Verhältnis 1:1 zu der im Extrakt vorhandenen Glukose, so dass der Glukosegehalt aus dem NADH-Gehalt unter Verwendung des molaren Extinktionskoeffizienten von NADH (6,3 1 mmol$^{-1}$ cm$^{-1}$) nach dem Lambert-Beer'schen Gesetz errechnet werden kann.
Nach der vollständigen Oxidation des Glukose-6-Phosphats wird das ebenfalls in der Lösung entstandene Fruktose-6-Phosphat mittels des Enzyms Phosphoglukoisomerase in Glukose-6-Phosphat umgewandelt, das wiederum zu 6-Phosphoglukonat oxidiert wird. Auch Fruktose und die gebildete NADH-Menge stehen im Verhältnis 1:1. Der Fruktosegehalt wird, wie für Glukose beschrieben, aus der gebildeten NADH-Menge errechnet.
Anschließend wird die im Extrakt vorhandene Saccharose durch das Enzym Sucrase (Firma Megazyme) in Glukose und Fruktose gespalten. Die freigesetzten Glukose- und Fruktose-Moleküle werden danach mit den oben genannten Enzymen in der NAD$^+$-abhängigen Reaktion in 6-Phosphoglukonat umgewandelt. Bei der Umwandlung von einem Molekül Saccharose in 6-Phosphoglukonat werden zwei Moleküle NADH gebildet. Die gebildete Menge an NADH wird ebenfalls photometrisch ermittelt und aus ihr unter Verwendung des molaren Extinktionskoeffizienten von NADH der Saccharose-Gehalt errechnet.

## 4. Analyse der Molekulargewichtsverteilung

### 4.1 Gelpermeationschromatographie mit Lichtstreu- und Brechungsindex-Detektion (GPC-RI-MALLS - System)

Die Inuline/Fruktane werden in Wasser in einer Konzentration von 0,5% (w/v) gelöst. Die Lösungen werden 10 Minuten auf 95°C erhitzt. Die Analyse der Polymere erfolgt mit folgenden Geräten: Gelchromatograph PL120 (Firma Polymer Laboratories, Deutschland), Midas Autosampler (Firma Spark, Holland), DAWN-EOS-Lichtstreudetektor (Wyatt Technology Santa Barbara, USA) mit $\lambda_0$= 690 nm und 16 Detektoren im Winkelbereich von 14,9 bis 162,9° sowie K5-Durchflusszelle, Viskositäts-Brechungsindex-Kombinationsdetektor $\eta$-1002 (Firma: WGE Dr. Bures GmbH & Co KG, Deutschland). Die Polymere werden über folgende Säulen aufgetrennt: TSK- Vorsäule, TSK6000PW, TSK3000PW (Firma Tosoh BioScience GmbH Stuttgart, Deutschland). Es wurden 100 $\mu$l Lösung injiziert. Die Auftrennung erfolgte bei einer Temperatur von 30°C und einer Flussrate von 0,8m1/min mit dem Elutionsmittel 0,3 M NaNO$_3$. Die Auswertung der Molekulargewichtsverteilung der Proben erfolgt bei der GPC-RI-MALLS-MALLS über das Programm Astra 4.90.08 (Firma Wyatt Technology Santa Barbara, USA).

## 5. Analyse von Inulinen mittels Ionenaustauschchromatographie und mit gepulster amperometrischer Detektion (HPAEC-PAD)

Die Auftrennung der Inulin-Polymergemische erfolgt mittels Anionenaustauschchromatographie und gepulster amperometrischer Detektion auf einem DIONEX-System (Gradientenpumpe GP50, Autosampler AS50, Säulenofen Modell 585, Detektor ED50, Vorsäule CarboPac PA-100, Trennsäule CarboPacPA-100, Firma DIONEX Corporation, Deutschland). Der Säulenofen hat eine Temperatur von 30°C. Der Eluent A ist 150 mM NaOH, der Eluent B 1 M Natriumacetat in 150 mM NaOH. Die Flussrate beträgt 1 ml/min.

Es werden 0,5 - 2% (w/v) Inulinlösungen in bidestilliertem Wasser hergestellt und bei 95°C inkubiert, bis sich das Inulin vollständig gelöst hat.

Die Wellenform am ED50 Detektor setzt sich wie folgt zusammen:

| Zeit (s) | Potential (V) | |
|---|---|---|
| 0.00 | 0.05 | |
| 0.28 | 0.05 | Integrationsbeginn |
| 0.48 | 0.05 | Integrationsende |
| 0.49 | 0.65 | |
| 0.60 | 0.65 | |
| 0.61 | - 0.96 | |
| 0.72 | - 0.96 | |
| 0.73 | 0.05 | |

Zur maximalen Auftrennung der Inulinpolymere wird folgender Gradient appliziert:

| Gradient 1: | Zeit (min) | Eluent A (%) | Eluent B (%) |
|---|---|---|---|
| (90 min) | 0 | 100 | 0 |
| | 5 | 100 | 0 |
| | 40 | 72 | 28 |
| | 70 | 55 | 45 |
| | 75 | 0 | 100 |
| | 80 | 0 | 100 |
| | 85 | 100 | 0 |
| | 90 | 100 | 0 |

Die Auswertung der Chromatogramme erfolgt mit Hilfe der Software Chromeleon (Version 6.6) der Firma DIONEX.

**6. Bestimmung des prozentualen Anteils von Inulinoligomeren mit Kettenlängen von DP=3 bis DP=10 am Gesamtinulin mittels HPAEC-PAD**

Die Bestimmung der Anteile der Inulinpolymere mit einer Kettenlänge von DP3 bis DP10 erfolgt über Anionenaustauschchromatographie und amperometrischer Detektion (siehe Methode 6) allerdings unter veränderter Detektoreinstellung und mit einem anderen Salzgradienten. Vom gereinigten Artischockeninulin werden 2% (w/v) wässrige Lösungen hergestellt. Von dieser Lösung werden pro Lauf 100 $\mu$l über Anionenaustauschchromatographie bei abgekoppeltem ED50 Detektor mit dem Gradienten 2 getrennt und nach der Säule die einzelnen Oligofruktane gesammelt. Es werden vier separate Läufe mit der 2%igen Inulinlösung durchgeführt.

| Gradient 2: | Zeit (min) | Eluent A (%) | Eluent B (%) |
|---|---|---|---|
| (50 min) | 0 | 100 | 0 |
| | 5 | 100 | 0 |
| | 35 | 76 | 24 |
| | 37 | 0 | 100 |
| | 42 | 0 | 100 |
| | 45 | 100 | 0 |
| | 50 | 100 | 0 |

Die aufgefangenen Fraktionen werden mit Essigsäure neutralisiert (pH=7) und anschließend über eine fünfminütige Inkubation mit einem Anionenaustauscher (mixed bed resin TMD8, Firma Sigma, Artikelnummer M8157) im Batchverfahren bei Raumtemperatur unter Schütteln von Salzen befreit. Der Ionenaustauscher wird durch Zentrifugation und Filtration über einen 0,2 μm Filter (ultrafree-MC, Firma amicon, Artikelnummer UFC3 0LG 25) aus der Lösung entfernt. Die Fraktionen werden eingefroren und im gefrorenen Zustand im Vakuumkonzentrator bis zur Trockene eingeengt. Die entsprechenden Fraktionen der vier Läufe werden in insgesamt 250 μl deionisiertem Wasser vereinigt.

Zur Bestimmung des Anteils der unterschiedlichen Oligomere werden die einzelnen Fraktionen mit Exo-Inulinase zu Glukose und Fruktose hydrolysiert. Die Fraktionen werden gegebenenfalls verdünnt. 100 μl Fraktionslösung werden mit 0,25 U Exo-Inulinase (Firma Megazyme, Artikelnummer E-EXO1) drei Stunden lang bei 37°C verdaut. Die Reaktion wird durch 10minütige Inkubation bei 95°C gestoppt. Nach dem Abkühlen wird die Lösung filtriert (ultrafree-MC, Firma amicon, Artikelnummer UFC3 0LG 25). 150μl des Filtrats werden über Ionenaustauschchromatographie mit dem Gradienten 2 und folgender Wellenform des Detektors aufgetrennt:

| Zeit (s) | Potential (V) | |
|---|---|---|
| 0.00 | 0.05 | |
| 0.20 | 0.05 | Integrationsbeginn |
| 0.40 | 0.05 | Integrationsende |
| 0.41 | 0.75 | |
| 0.60 | 0.75 | |
| 0.61 | - 0.15 | |
| 1.00 | -0.15 | |

Das HPAEC-PAD-System wird mit Glukose und Fruktose-Standardlösungen im Konzentrationsbereich von 6μM - 30μM kalibriert. Die Konzentrationen der in den Fraktionen freigesetzten Glukose und Fruktose werden mit Hilfe dieser Kalibrierung ermittelt (in μmol/l).

Zur Berechnung des prozentualen Anteils der Oligomere DP3 bis DP10 am Gesamtinulin wird die Summe der für das jeweilige Oligomer freigesetzter Glukose und Fruktose durch die Einwaage des gereinigten Artischockeninulins (2%ige Lösung) geteilt.

**7. Bestimmung des Wassergehalts**

Die Bestimmung des Wassergehalts erfolgt mit dem Karl-Fischer-Titrator AQUA 40.00 (Firma analytikjena AG). Als Anolyt wird Hydranal-Coulomat AG (Riedel-deHaën, Artikel-Nr. 34836) verwendet. Als Referenzsubstanz dient Natriumtartrat-Dihydrat dibasisch (Riedel-deHaën, Artikel-Nr. 32323) mit einem Feuchtegehalt von 15,61-15,71%. 10 -20 mg Probe werden in 5 ml Probengläser eingewogen (N20-5DIN, Machery-Nagel, Artikel-Nr. 702 04.36), die Gläser mit Bördelkappen (N20 TS/oA, Machery-Nagel, Artikel-Nr. 702 815) verschlossen und der Wassergehalt der Probe mit dem Karl-Fischer-Tritator bestimmt.

**Beispiel 1**

**Charakterisierung des Inulins aus Wurzeln von Artischocken**

**1. Kultivierung der Artischockenpflanzen**

Die Anzucht der Artischockenpflanzen der Sorte Nun944 (auch als N944 bezeichnet) erfolgte in der Nähe von Valencia, Spanien. Die Samenaussaat erfolgte im Juni in einem Netzgewächshaus in Pflanzkästen mit 104 Vertiefungen (8x13 Löcher, 4 x 4 cm). Die Pflanzen wurden sechs Wochen in den Pflanzkästen kultiviert. Anfang August erfolgte die Auspflanzung ins Feld mit einer Pflanzdichte von 10.000 Pflanzen/ha. Im Juli des darauf folgenden Jahres wurden die gesamten Pflanzen geerntet. Die Wurzeln wurden vom oberirdischen Teil getrennt und mit Wasser (unter Druck) und zusätzlich manuell von anhaftender Erde befreit. Die Wurzeln wurden auf einem befestigten Untergrund im Schatten 3 Tage lang getrocknet Die Wurzeln wurden anschließend ungekühlt von Spanien nach Deutschland transportiert. Bis zur Extraktion des Inulins wurden die Wurzeln bei -80°C gelagert.

**2. Inulinpräparation aus Artischockenwurzeln**

Für die Inulinpräparation wurden Artischockenwurzeln der Sorte Madrigal (ex Nun 9444) bei Raumtemperatur aufgetaut und in Stücke geschnitten. Die Extraktion und Aufreinigung des Inulin erfolgte wie in der oben beschriebenen Methode "Inulinreinigung und -fraktionierung" beschrieben. Das gereinigte Inulin aus mehreren Präparationen wurde zu einer Probe vereinigt.

## 3. Bestimmung der Reinheit des präpariertem Inulin

Die Bestimmung der Reinheit des präparierten Artischockeninulins erfolgte über die Bestimmung des Fruktan- und Wassergehalts des gefriergetrockneten Materials. Für das Artischockeninulin wurde ein Wassergehalt bestimmt von 5,4%, (siehe Methode "Bestimmung des Wassergehaltes").
Für die Bestimmung des Fruktan/Inulingehalts wurden 20 mg Artischockeninulin in 2 ml bidestilliertem Wasser eine Stunde lang unter Schütteln im Heizblock bei 95°C inkubiert. Der Fruktan/Inulingehalt wurde sowohl (1) mit dem "Fructan Assay Procedure"- Kit (siehe Methode 2.1) als auch (2) durch Hydrolyse des Inulins mittels Exo-Inulinase und anschließender enzymatischer Bestimmung des Gehalts an freigesetzter Glucose und Fructose (siehe Methode 2.2) bestimmt. Für (1) wurden die Proben 1:5 mit bidestilliertem Wasser verdünnt. Aus dem Fruktangehalt und dem Wassergehalt wurde die Reinheit bezogen auf Trockenmasse (TM) ermittelt. Reinheit = Fruktangehalt x 100 / (100- Wassergehalt) Wie aus Tabelle 1 ersichtlich, liegt der durchschnittliche Reinheitsgrad des präparierten Artischockeninulins je nach Bestimmungsmethode bei 92,5 bzw. 99,1 % der Trockenmasse (TM).

Tabelle 1: Bestimmung der Reinheit des präparierten Artischockeninulins

| Material | Wasser gehalt [%] | (1) Fructan Assay Procedure | | (2) Exo-Inulinase-Verdau | |
|---|---|---|---|---|---|
| | | Fruktan [% Einwaage] | Reinheit [% TM] | Fruktan [% Einwaage] | Reinheit [% TM] |
| Artischockeninulin | 5,4 | 86,5 ± 2,2 | 91,5 ± 2,2 | 94,5 ± 4,1 | 99,1 ± 4,1 |

## 4. Molekulargewichtsbestimmung mittels GPC-RI-MALLS

Vom gereinigten Artischockeninulin sowie von den käuflich erworbenen Referenzproben Raftiline HP (Firma Orafti, Charge: HPBN03DN03) und Inulin aus Dahlienknollen (Firma Sigma, Artikelnummer I-3754, Charge: 022K7045) wurden 0,5% (w/v) wässrige Lösungen hergestellt und die Molmassenverteilung der Inuline mittels Gelpermeationschromatographie (siehe Methode 4) bestimmt. Diese Verteilung ist in der Abbildung 1 dargestellt, die hieraus berechneten Molmassen (Anhydrofruktose = 162 g/mol) und mittleren Kettenlängen wurden in Tabelle 2 zusammengefasst.
Die Auswertung der Molekulargewichtsverteilung mit dem GPC-RI-MALLS-System ergab für das Artischockeninulin eine gewichtsmittlere Molmasse $M_w$ von 9045 g/mol und eine zahlenmittlere Molmasse $M_n$ von 7797 g/mol. Dies entspricht einer mittleren Kettenlänge für DPw von 56 sowie DPn von 48. Die Kettenlängen des gereinigten Artischockeninulins sind im Mittel deutlich länger als die des Raftiline HP (DPw=25, DPn=23) und des Dahlieninulins (DPw=29, DPn=26). Dies spiegelt sich auch in den minimalen und maximalen Molmassen wider, die für das Artischockeninulin deutlich größer sind.

Tabelle 2: Molmassenverteilung unterschiedlicher Inuline

| Material | $M_w$ [g/mol] | $M_n$ [g/mol] | Polymer verteilung (min - max) [g/mol] | DPw | DPn | Molekulare Dispersität |
|---|---|---|---|---|---|---|
| Artischockeninulin | 9045±45 | 7797±46 | 2650-28630 | 56 | 48 | 1,17 |
| Raftiline HP | 4120±28 | 3673±45 | 1210-11610 | 25 | 23 | 1,09 |
| Dahlieninulin | 4734±68 | 4242±50 | 1590-12300 | 29 | 26 | 1,11 |

## Molmassenverteilung aus GPC-RI-MALLS

Abbildung 1: Analyse der Molmassenverteilung unterschiedlicher Inuline

**5. Ergebnisse Glukose-, Fruktose- und Saccharosebestimmung**

Zur Bestimmung des Anteils an Glukose, Fruktose und Saccharose des gereinigten Artischockeninulins wurden 1% und 2%ige wässrige Inulinlösungen hergestellt und für eine Stunde bei 95°C inkubiert. Anschließend erfolgte eine photometrische Bestimmung der Zucker wie in Methode 3 ("Zuckerbestimmung") beschrieben.
Wie aus Tabelle 3 ersichtlich, ist in dem gereinigten Artischockeninulin Fruktose nur mit einem Gehalt von 0,1 % nachweisbar. Glukose und Saccharose konnten mit der photometrischen Nachweismethode unter den beschriebenen Bedingungen nicht detektiert werden.

Tabelle 3: Gehalt an Glukose, Fruktose und Saccharose im gereinigten Artischockeninulin

| Material | Glukose (g/100g Inulinpulver) | Fruktose (g/100g Inulinpulver) | Saccharose (g/100g Inulinpulver) |
|---|---|---|---|
| Artischockeninulin | Nicht detektierbar | 0,1 | Nicht detektierbar |

**6. Bestimmung des prozentualen Anteils von Oligofruktanen mit einer Kettenlänge DP=3 bis DP=10 am Gesamtinulin mittels HPAEC-PAD**

Zur Berechnung des prozentualen Anteils von Oligofruktanen mit einer Kettenlänge DP=3 bis DP=10 am Gesamtinulin wurden 2% (w/v) wässrige Lösungen des gereinigten Artischockeninulins hergestellt, über HPAEC-PAD aufgetrennt (Methode 5) und die Anteile der Oligofruktane gemäß Methode 6 berechnet. Hieraus ergaben sich folgende Werte

| Inulinoligomer | Gehalt (g/100g Pulver) |
|---|---|
| DP3 | 0,007 |
| DP4 | 0,016 |
| DP5 | 0,012 |

(fortgesetzt)

| Inulinoligomer | Gehalt (g/100g Pulver) |
|----------------|------------------------|
| DP6 | 0,013 |
| DP7 | 0,024 |
| DP8 | 0,029 |
| DP9 | 0,044 |
| DP10 | 0,072 |
| Summe | 0,217 |

**Patentansprüche**

1. Inulin, **dadurch gekennzeichnet, dass** das Inulin einen mittleren Polymerisationsgrad $DP_w$ zwischen 54 und 61 aufweist.

2. Inulin nach Anspruch 1, **dadurch gekennzeichnet, dass** das Inulin einen mittleren Polymerisationsgrad $DP_w$ zwischen 55 und 60 aufweist.

3. Inulin nach Anspruch 1, **dadurch gekennzeichnet, dass** das Inulin einen mittleren Polymerisationsgrad $DP_w$ zwischen 56 und 57 aufweist.

4. Inulin nach einem der Ansprüche 1 bis 3, **dadurch gekennzeichnet, dass** der Gehalt an Glukose kleiner ist als 2%.

5. Inulin nach Anspruch 4, **dadurch gekennzeichnet, dass** der Gehalt an Glukose kleiner ist als 1%.

6. Inulin nach einem der Ansprüche 1 bis 5, **dadurch gekennzeichnet, dass** der Gehalt an Fruktose kleiner ist als 2,5%.

7. Inulin nach Anspruch 6, **dadurch gekennzeichnet, dass** der Gehalt an Fruktose kleiner ist als 1,5%.

8. Inulin nach einem der Ansprüche 1 bis 7, **dadurch gekennzeichnet, dass** der Gehalt von Fruktooligosacchariden mit einem DP von 3 bis 10 kleiner ist als 3 %.

9. Inulin nach einem der Ansprüche 1 bis 8, **dadurch gekennzeichnet, dass** der Gehalt von Fruktooligosacchariden mit einem DP von 3 bis 10 kleiner ist als 1,5 %.

10. Inulin nach einem der Ansprüche 1 bis 8, **dadurch gekennzeichnet, dass** der Gehalt von Fruktooligosacchariden mit einem DP von 3 bis 10 kleiner ist als 0,7 %.

EP 1 712 568 A1

**Europäisches Patentamt**

# EUROPÄISCHER RECHERCHENBERICHT

Nummer der Anmeldung

EP 05 09 0107

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>Y | US 4 954 622 A (COOPER ET AL)<br>4. September 1990 (1990-09-04)<br>* Spalte 6, Zeile 36 - Spalte 7, Zeile 18;<br>Beispiel 1 *<br>----- | 1,4-10<br><br>2,3 | C08B37/18 |
| Y<br><br><br><br><br><br><br>A | W. PRAZNIK UND R. H. F. BECK:<br>"Application of Gel Permeation<br>Chromatography Systems to the<br>Determination of the Molecular Weight of<br>Inulin"<br>JOURNAL OF CHROMATOGRAPHY,<br>Bd. 348, 1985, Seiten 187-197, XP002362661<br>Amsterdam/NL<br>* Seite 188, Absatz 2; Abbildung 4;<br>Tabelle 1 *<br>----- | 2,3<br><br><br><br><br><br><br>1,4-10 | |
| A | EP 0 787 745 A (MCNEIL-PPC, INC)<br>6. August 1997 (1997-08-06)<br>* Seite 2, Zeilen 25-27; Ansprüche 1-11 *<br>----- | | |

RECHERCHIERTE SACHGEBIETE (IPC)

C08B

Der vorliegende Recherchenbericht wurde für alle Patentansprüche erstellt

| Recherchenort | Abschlußdatum der Recherche | Prüfer |
|---|---|---|
| München | 13. Januar 2006 | Radke, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

# EP 1 712 568 A1

**ANHANG ZUM EUROPÄISCHEN RECHERCHENBERICHT
ÜBER DIE EUROPÄISCHE PATENTANMELDUNG NR.**

EP 05 09 0107

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2006

| Im Recherchenbericht angeführtes Patentdokument | Datum der Veröffentlichung | Mitglied(er) der Patentfamilie | Datum der Veröffentlichung |
|---|---|---|---|
| US 4954622 A | 04-09-1990 | WO 8702679 A1 | 07-05-1987 |
| | | CA 1300612 C | 12-05-1992 |
| | | DE 3689071 D1 | 28-10-1993 |
| | | DE 3689071 T2 | 10-02-1994 |
| | | EP 0247071 A1 | 02-12-1987 |
| | | JP 7025683 B | 22-03-1995 |
| | | JP 63501570 T | 16-06-1988 |
| | | US 5051408 A | 24-09-1991 |
| EP 0787745 A | 06-08-1997 | AT 257846 T | 15-01-2004 |
| | | AU 718769 B2 | 20-04-2000 |
| | | CA 2196739 A1 | 06-08-1997 |
| | | DE 69727162 D1 | 19-02-2004 |
| | | DE 69727162 T2 | 26-08-2004 |
| | | DK 787745 T3 | 03-05-2004 |
| | | ES 2214589 T3 | 16-09-2004 |
| | | HU 9700359 A2 | 30-03-1998 |
| | | JP 9324002 A | 16-12-1997 |
| | | NO 970490 A | 06-08-1997 |
| | | NZ 314187 A | 28-01-1999 |
| | | PT 787745 T | 31-05-2004 |
| | | US 5968365 A | 19-10-1999 |

EPO FORM P0461

Für nähere Einzelheiten zu diesem Anhang : siehe Amtsblatt des Europäischen Patentamts, Nr.12/82

13